# EUROPEAN PATENT APPLICATION

(11) **EP 4 838 486 A1**
(43) Date of publication of application: **11.11.2026**
(21) Application number: 26176776.8
(22) Date of filing: 06.05.2026
(51) Int. Cl.: G06V 20/10

(54) **METHOD AND SYSTEM FOR NON-INVASIVELY ESTIMATING CROP AGE OF STANDING CROPS**

(30) Priority: 09.05.2025 IN 202521045046
(71) Applicant: Tata Consultancy Services Limited, Mumbai, Maharashtra 400 021 (IN)
(72) Inventor: KUMAR, Abhishek, 411057 Pune, Maharashtra (IN); PATIL, Ruturaj Nivas, 411057 Pune, Maharashtra (IN); SARANGI, Sanat, 400601 Thane, Maharashtra (IN); SINGH, Dineshkumar Jang Bahadur, 400601 Thane, Maharashtra (IN); PAPPULA, Srinivasu, 500081 Hyderabad, Telangana (IN)
(74) Representative: Goddar, Heinz J.

(57) **Abstract**

The present disclosure herein addresses the unresolved problem of estimating crop age of standing crops. The present disclosure provides a method for non-invasively estimating crop age of standing crops. Existing techniques use manual inspection, remote sensing or UAV-based studies for crop height and biomass estimation but fails to establish a relationship between crop age and growth features and other phenotypic factors, that improves accuracy in predicting biomass and yield over time. Unlike the existing techniques, the present disclosure provides a non-invasive system and method for accurately estimating crop age of standing crops by integrating crop specific stress and impact value based on crop type along with corresponding days after sowing (DAS). Moreover, the present disclosure further estimates a change in days after sowing along with a biomass value to generate a set of actionable insights to improve crop health, mitigate stress effects, and optimize agricultural practices.

## Description

### CROSS-REFERENCE TO RELATED APPLICATIONS AND PRIORITY

The present application claims priority to Indian application no. 202521045046, filed on May 9, 2025.

### TECHNICAL FIELD

The disclosure herein generally relates to crop growth monitoring, and, more particularly, to a method and system for non-invasively estimating crop age of standing crops.

### BACKGROUND

Crop age estimation is critical in various agricultural and research applications. The process of crop age estimation is widely used for growth monitoring, allowing farmers and agronomists to assess plant development stages and implement timely interventions. In yield prediction models, accurate crop age estimation or crop age data enhances forecasting accuracy by correlating age with biomass and phenotypic traits. Precision agriculture leverages crop age estimation to optimize irrigation, fertilization, and pest control strategies based on the plant's growth stage. Further, in remote sensing and UAV-based monitoring, crop age estimation improves classification accuracy in multispectral and hyperspectral imaging analyses. Additionally, crop insurance and subsidy programs use age estimation to verify crop maturity for financial assessments and claims processing.

Many studies focus on plant growth parameters like biomass, plant height, or leaf area index, but they fail to incorporate the relevance of crop age as a key factor affecting growth characteristics and yield estimation. Accurate estimation of crop age is critical for effective crop management, yield prediction, and resource optimization. Conventional methods involve manual inspection or destructive sampling, which can be labor-intensive and inefficient. With advancements in computer vision and machine learning, there is potential to automate this process using image data, thereby enhancing precision agriculture practices.

However, the existing methods often rely on a limited number of features, such as plant leaf area and shoot dry weight, without considering the broader spectrum of variables that could improve growth estimation, especially with respect to the evolving crop age. A few prior arts include UAV-based studies for crop height and biomass estimation but fail to establish the relationship between crop age and growth features like biomass, crop height, and other phenotypic factors, that improve accuracy in predicting biomass and yield over time.

Existing methods also include UAV-based RGB imagery for biomass estimation, yet there is a gap in integrating crop height and other phenotypic features in the context of crop age.

### SUMMARY

Embodiments of the present disclosure present technological improvements as solutions to one or more of the above-mentioned technical problems recognized by the inventors in conventional systems. For example, in one embodiment, a system for non-invasively estimating crop age of standing crops is provided. The system includes a memory storing instructions; one or more Input/Output (I/O) interfaces; and one or more hardware processors coupled to the memory via the one or more I/O interfaces, wherein the one or more hardware processors are configured by the instructions to identify a crop type from a plurality of images of one or more crops in an open field or a controlled environment agriculture. The one or more hardware processors are configured to receive the plurality of images comprising a set of red, green and blue (RGB) images of side view and top view of the one or more crops. The crop type is identified from the plurality of images using a crop detection model. The crop detection model is trained on crop images and crop name. The crop detection model using standard image processing algorithms initially detects the crop/plant type from the plurality of images. If the presence of crops is detected, the crop detection model using the standard algorithms, such as a customized CNN classification algorithm, provides the crop type, wherein the crop type includes a crop name such as maize, sugarcane or wheat etc. If the crop detection model is not able to detect the crop from the plurality of images the process is terminated until new data is received. Further the system is configured to derive a biomass value of the crop type using the plurality of images preferably only top view RGB image as input. The crop features such as plant height, canopy area, etc., are extracted from the plurality of images by an image-based biomass detection model to provide the biomass value, wherein the canopy area of a crop is the surface area of the plant's leaves and stems exposed to sunlight. The image-based biomass detection model is a custom CNN regression model, trained on crop images and crop biomass, which takes the plurality of images of the crop to estimate the biomass value.

Further the system is configured to extract a feature metric of the crop type by preprocessing the plurality of images, wherein the feature metrics comprises plant height, number of leaves, flower length, flower width, number of flowers, fruit length, fruit width, number of fruit, Color of fruit, senescence at near maturity stage on the crop type using a plurality of preprocessing models. Further the system is configured to estimate a first days after sowing (DAS) value of the crop type using the feature metric with the help of a crop age estimation unit. Further the system via the one or more hardware processors are configured to estimate a crop-specific stress matrix from a stress value (in %) and the plurality of images, wherein the crop-specific stress matrix is obtained from an Impact Knowledge Base based on the crop type. Further the system is configured to estimate a second days after sowing (modified DAS) value by aggregating the feature metric and an impact value, wherein the impact value comprises a biotic stress impact, an abiotic stress impact and a management stress impact. The impact value is computed from the biotic stress impact, the abiotic stress impact and the management stress impact. Furthermore, the system is configured to estimate a crop age from the second DAS (modified DAS) value, wherein the second DAS value represents actual age of the crop type considering the impact value.

In another aspect, a method for non-invasively estimating crop age of standing crops is provided. The method includes identifying via one or more hardware processors a plurality of images of one or more crops in an open field or a controlled environment agriculture. The one or more hardware processors are configured to receive the plurality of images comprising of a set of red, green and blue (RGB) images of side view and top view of the one or more crops . The crop type is identified from the plurality of images using a crop detection model. The crop detection model is trained on crop images and crop name. The crop detection model using standard image processing algorithms initially detects the crop/plant type from the plurality of images. If the presence of crops are detected, the crop detection model using the standard algorithms, such as a customized CNN classification algorithm, provides the crop type, wherein the crop type includes a crop name such as maize, sugarcane or wheat etc. If the crop detection model is not able to detect the crop from the plurality of images the process is terminated until new data is received. Further the method via one or more hardware processors derives a biomass value of the crop type using the plurality of images preferably only top view RGB image as input. The crop features such as plant height, canopy area, etc., are extracted from the plurality of images by an image-based biomass detection model to provide the biomass value, wherein the canopy area of a crop is the surface area of the plant's leaves and stems exposed to sunlight The image-based biomass detection model is a custom CNN regression model, trained on crop images and crop biomass, which takes the plurality of images of the crop to estimate the biomass value.

Further the method via one or more hardware processors extract a feature metric of the crop type by preprocessing the plurality of images, wherein the feature metrics comprises plant height, number of leaves, flower length, flower width, number of flowers, fruit length, fruit width, number of fruit, Color of fruit, senescence at near maturity stage on the crop type using a plurality of preprocessing models. Further the method via the one or more hardware processors estimates a first days after sowing (DAS) value of the crop type using the feature metric with the help of a crop age estimation unit. Further the method via the one or more hardware processors estimates a crop-specific stress matrix from a stress value (in %) and the plurality of processed images, wherein the crop-specific stress matrix is obtained from an Impact Knowledge Base based on the crop type. Further the method via the one or more hardware processors estimates a second days after sowing (modified DAS) value by aggregating the feature metric and an impact value, wherein the impact value comprises a biotic stress impact, an abiotic stress impact and a management stress impact. The impact value is computed from the biotic stress impact, the abiotic stress impact and the management stress impact. Furthermore, the method via the one or more hardware processors estimates a crop age from the second DAS (modified DAS) value, wherein the second DAS value represents actual age of the crop type considering the impact value.

In yet another aspect, a non-transitory computer readable medium for a method for non-invasively estimating crop age of standing crops is provided. The method includes identifying via one or more hardware processors a plurality of images of one or more crops in an open field or a controlled environment agriculture. The one or more hardware processors are configured to receive the plurality of images comprising a set of red, green and blue (RGB) images of side view and top view of the one or more crops. The crop type is identified from the plurality of images using a crop detection model. The crop detection model is trained on crop images and crop name. The crop detection model using standard image processing algorithms initially detects the crop/plant type from the plurality of images. If the presence of crops are detected, the crop detection model using the standard algorithms, such as a customized CNN classification algorithm, provides the crop type, wherein the crop type includes a crop name such as maize, sugarcane or wheat etc. If the crop detection model is not able to detect the crop from the plurality of images the process is terminated until new data is received. Further the method via one or more hardware processors derives a biomass value of the crop type using the plurality of images preferably only top view RGB image as input. The crop features such as plant height, canopy area, etc., are extracted from the plurality of images by an image-based biomass detection model to provide the biomass value, wherein the canopy area of a crop is the surface area of the plant's leaves and stems exposed to sunlight. The image-based biomass detection model is a custom CNN regression model, trained on crop images and crop biomass, which takes the plurality of images of the crop to estimate the biomass value.

Further the method via one or more hardware processors extract a feature metric of the crop type by preprocessing the plurality of images, wherein the feature metrics comprises plant height, number of leaves, flower length, flower width, number of flowers, fruit length, fruit width, number of fruit, Color of fruit, senescence at near maturity stage on the crop type using a plurality of preprocessing models. Further the method via the one or more hardware processors estimates a first days after sowing (DAS) value of the crop type using the feature metric with the help of a crop age estimation unit. Further the method via the one or more hardware processors estimates a crop-specific stress matrix from a stress value (in %) and the plurality of processed images, wherein the crop-specific stress matrix is obtained from an Impact Knowledge Base based on the crop type. Further the method via the one or more hardware processors estimates a second days after sowing (modified DAS) value by aggregating the feature metric and an impact value, wherein the impact value comprises a biotic stress impact, an abiotic stress impact and a management stress impact. The impact value is computed from the biotic stress impact, the abiotic stress impact and the management stress impact. Furthermore, the method via the one or more hardware processors estimates a crop age from the second DAS (modified DAS) value, wherein the second DAS value represents actual age of the crop type considering the impact value.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system of a non-invasive method for crop age estimation according to some embodiments of the present disclosure.
FIG. 2 is a flow diagram illustrating a non-invasive method for crop age estimation, using the system of FIG. 1, according to some embodiments of the present disclosure.
FIGS. 3A through 3B illustrate an example architecture of the system of FIG. 1, for the non-invasive method for crop age estimation, in accordance with some embodiments of the present disclosure.
FIG. 4 depicts a high-level architecture of an impact knowledge base, used by the system of FIG. 1, for the non-invasive method for crop age estimation, according to some embodiments of the present disclosure.
FIG. 5 is a block diagram illustrating impact calculation in accordance with some embodiments of the present disclosure.
FIGS. 6A through 6B, illustrate a crop age estimation unit of the non-invasive method for crop age estimation in accordance with some embodiments of the present disclosure.
FIG. 7 is a block diagram illustrating a feature metric converter within the crop age estimation unit in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

### GLOSSARY:

The term "Biomass" refers to an actual amount of accumulated crop matter such as leaves, stem, roots, branches etc., within a crop.

The term "impact" refers to an effect or influence of different types of stresses on crop growth features.

The term "impact knowledge base" refers to knowledge base where quantitative reduced features metrics with respect to day-wise impact of stress on growth features of particular crop information would be present.

The term "days after sowing (DAS)" refers to a total number of days passed since the crop has sown or planted in the soil based on current crops growth features detected using image without considering impact.

The term "modified DAS" refers to an actual number of days (in DAS) passed since the crop has sown or planted based on current crops growth features detected using image considering impact.

The term "biotic stress" and "abiotic stress" refers to negative impact on crops caused by living organisms, such as pests, diseases, and weeds, while "abiotic stress" refers to the impact of non-living factors, such as extreme temperatures, drought, or soil salinity, on crops.

Traditional crop age estimation methods rely on manual field observations, which are time-consuming, labor-intensive, and prone to human error. Similarly, calendar-based approaches, which estimate age based on sowing dates, fail to account for environmental variations that influence growth rates. Spectral vegetation indices derived from satellite or UAV imagery provide indirect estimations but often lack precision in differentiating similar growth stages. Furthermore, machine learning models trained on limited datasets for crop age estimation struggles to generalize across different crops and environmental conditions. Additionally, existing methods often fail to establish a direct correlation between crop age and phenotypic traits, leading to reduced accuracy in biomass and yield predictions, wherein the phenotypic traits include crop height, number of leaves, flower length, flower width, number of flowers, fruit length, fruit width, number of fruit, color of fruit, and senescence at near maturity stage.

A few prior arts exhibit limitations in incorporating crop age as a critical factor in growth estimation. Conventional methods primarily focus on plant growth parameters such as biomass, plant height, and leaf area index but fail to integrate crop age, which significantly influences growth characteristics and yield estimation. The absence of crop age consideration reduces the accuracy and reliability of predictive models.

Existing techniques rely on a restricted set of features for growth estimation, such as plant leaf area and shoot dry weight, without incorporating a broader range of variables. Particularly, the evolving impact of crop age on these features is not sufficiently addressed, limiting the effectiveness of current estimation methods.

Many UAV-based approaches for biomass and crop height estimation fail to establish a correlation between crop age and key growth features, such as biomass, crop height, and other phenotypic factors. The absence of this relationship weakens the accuracy of biomass and yield predictions over different growth stages.

While UAV-based RGB imagery is widely used for biomass estimation, existing methods do not effectively integrate crop height and other phenotypic traits in the context of crop age. The lack of such integration restricts the precision of biomass and yield estimation models.

Several existing models are geographically constrained, such as those developed for specific crops in a particular region, limiting their applicability to other areas with different environmental conditions. Additionally, these models often fail to incorporate crop age as a key parameter, further reducing their generalization and predictive accuracy.

To address the aforementioned challenges of the state-of-the-art approaches, the present disclosure provides a non-invasive system and method for accurately estimating crop age and biomass of standing crops using image processing and artificial intelligence. The system analyzes RGB crop images (side and top views) through dual-pathway models for biomass and crop detection, incorporating historical crop data and Control Measure Status (CMS) to enable flexible analysis of current and past data.

The present system integrates key components, including an Impact Knowledge Base, an Impact Calculation Unit, and a Crop age estimation Unit, enhanced by weather data and a Generative AI-powered Recommendation Unit. Further, the present system detects crop type, activates the Crop age estimation Unit to determine a Days After Sowing (DAS) of the crop type, and consults the Impact Knowledge Base to assess real-time stress effects on growth and consequently updates the impact knowledge base according to the feedback received from the Crop age estimation Unit. The Impact Calculation Unit then calculates an impact value on crop development. The Crop age estimation Unit modifies the crop age by considering stress-induced changes, providing a Modified Crop Age and calculating the change in DAS (ΔDAS) due to stress factors. Real-time crop image data is processed to accurately estimate crop age in DAS, ensuring alignment with ideal growth patterns.

The present system with seamless integration of components enables precise predictions of crop age and biomass, supporting data-driven decisions in precision agriculture. The non-invasive approach preserves crop integrity while providing accurate age estimations, offering a reliable, automated solution for crop monitoring across diverse agricultural environments.

One of the primary challenges in developing the disclosed method involved integrating diverse data sources into a cohesive system. The data sources included RGB images, weather data, and historical crop data. Ensuring seamless interoperability between the heterogeneous datasets requires sophisticated data processing techniques and alignment strategies to maintain accuracy and consistency. Another challenge involved the creation of crop-specific impact knowledge base that dynamically updates based on changing environmental and agronomical conditions. The impact knowledge base incorporated metrics derived from crop growth features and accounted for various biotic, abiotic, and management stresses. Developing such a system required exhaustive experimentation to capture domain-specific parameters while maintaining adaptability for different crop varieties and environmental factors.

Ensuring accuracy in biomass and crop age estimation presented significant challenges due to variations in growth patterns and stress factors. Implementing image processing techniques and machine learning models capable of addressing the variations required extensive training and validation. Additionally, compensating for environmental influences, such as weather fluctuations and soil conditions, added complexity to the predictive models.

Designing the system to be scalable and adaptable to different crop types and farming conditions while maintaining accuracy and reliability was a crucial challenge. The system architecture needed to support diverse agricultural settings, from small-scale farms to large agribusiness operations, without requiring extensive modifications. Achieving scalability while ensuring precision in predictions necessitates robust data pipelines and modular design approaches.

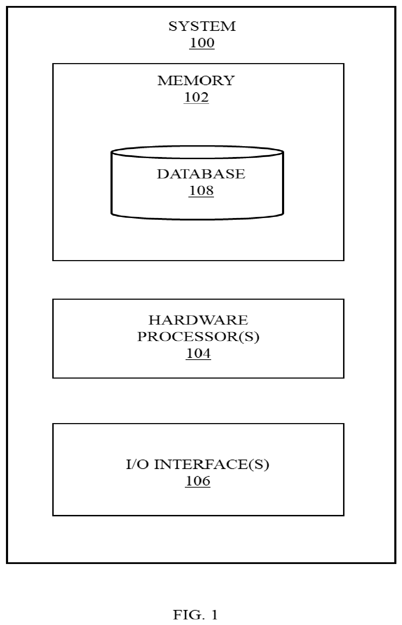

Referring now to the drawings, and more particularly to FIG. 1 through FIG. 7, where similar reference characters denote corresponding features consistently throughout the figures, there are shown preferred embodiments and these embodiments are described in the context of the following exemplary system and/or method.

FIG. 1 illustrates an exemplary block diagram of a system 100 for non-invasive crop age estimation, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The memory 102 comprises a database 108. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) 106 receives a material characteristic data and a user query as input and gives recommendation of matching materials as output.

The memory 102 may include any computer-readable medium known in the art including, for example, volatile memory, such as static random-access memory (SRAM) and dynamic random- access memory (DRAM), and/or non-volatile memory, such as read only memory (ROM), erasable programmable ROM, flash memories, hard disks, optical disks, and magnetic tapes.

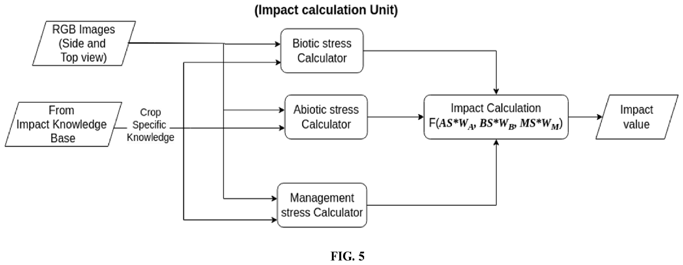

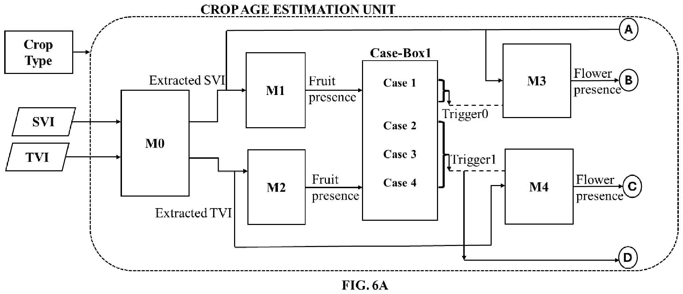

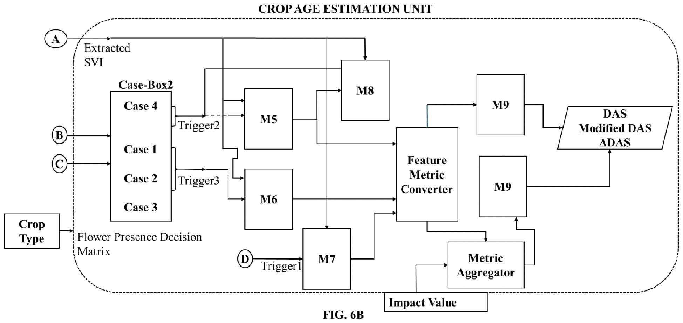

In an embodiment, the memory 102 includes a plurality of modules 110 for the crop age estimation (FIG 6A and 6B) and impact calculation (FIG. 5). The plurality of modules 110 includes programs or coded instructions that supplement applications or functions performed by the system 100 for executing one or more steps involved in the non-invasive method for crop age estimation. The plurality of modules 110, amongst other things, can include routines, programs, objects, components, and data structures, which perform particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

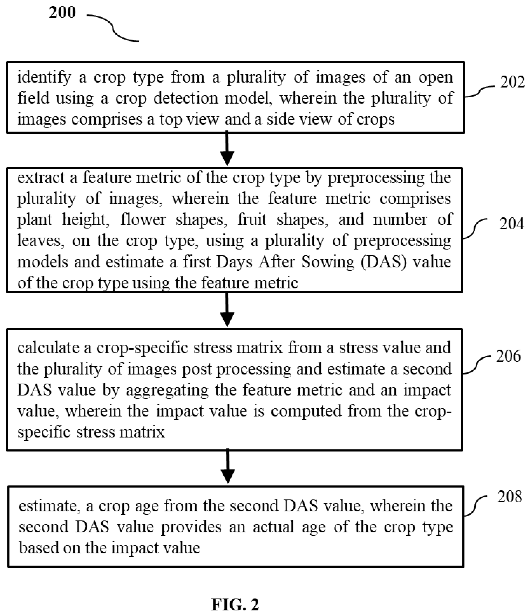

Functions of the components of the system 100 are explained in conjunction with flow diagram depicted in FIG. 2 for non-invasive method for crop age estimation.

FIG. 2 is a flow diagram illustrating a non-invasive method for crop age estimation according to some embodiments of the present disclosure. In an embodiment, the system 100 comprises one or more data storage devices or the memory 102 operatively coupled to the processor(s) 104 and is configured to store instructions for execution of steps of the method (200) depicted in FIG. 2 by the processor(s) or one or more hardware processors 104. The steps of the method of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practically. Further, some steps may be performed simultaneously.

Now, referring to FIG. 2, at step 202 of the method 200, the one or more hardware processors (104) are configured to identify a crop type from a plurality of images of one or more crops in an open field or a controlled environment agriculture. The term 'open field' refers to a land area being monitored, wherein in the open field, one or more types of crops are being cultivated, for which the crop age estimation is being performed. The term 'controlled environment agriculture' refers to a method of agriculture that includes indoor agriculture (IA) and vertical farming, wherein the controlled environment agriculture consists of crop production systems in greenhouses or other structures that use horticulture and engineering techniques beyond conventional soil-based outdoor production. The one or more hardware processors (104) are configured to receive the plurality of images comprising, a set of red, green and blue (RGB) images of side view and top view of the one or more crops in the open field or the controlled environment agriculture. The crop type is identified from the plurality of images using a crop detection model. The crop detection model is trained on crop images and crop name, of the one or more crops. The crop detection model, using standard image processing algorithms such as image segmentation, initially detects presence of the crop/plant type from the plurality of images. If the presence is detected, the crop detection model using the standard algorithms, such as a customized CNN classification algorithm, determines the crop type, wherein the crop type includes a crop name such as maize, sugarcane or wheat etc. If the crop detection model is not able to detect the crop from the plurality of images, the process of determining the crop type is terminated until a new data is received. At the same step, a biomass value of the crop type is derived using the plurality of images, preferably only on top view RGB image. The crop features such as plant height, canopy area, etc., are extracted from the plurality of images by an image-based biomass detection model to provide the biomass value, wherein the canopy area of a crop is the surface area of the plant's leaves and stems exposed to sunlight. The image-based biomass detection model is a custom CNN regression model, trained on crop images and crop biomass, which takes the plurality of images of the crop to estimate the biomass value.

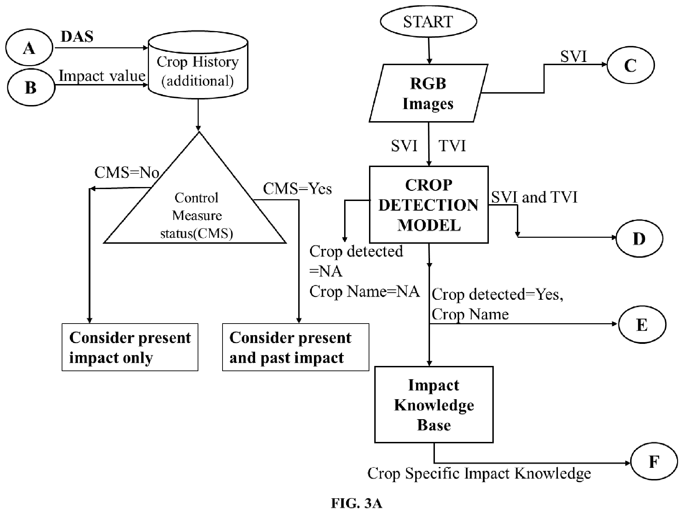

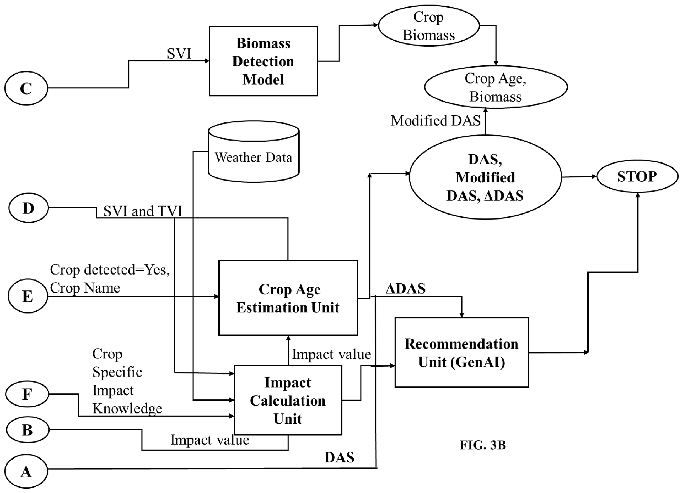

Further, at step 204 of the method 200, the one or more hardware processors (104) are configured to extract a feature metric of the crop type by preprocessing the plurality of images, wherein the feature metrics comprises plant height, number of leaves, flower length, flower width, number of flowers, fruit length, fruit width, number of fruit, Color of fruit, and senescence at near maturity stage on the crop type, using a plurality of preprocessing models such as K-Nearest Neighbors Models, Artificial Neural Network models etc. At the step 204 of the method 200, the one or more hardware processors (104) are configured to estimate a first days after sowing (DAS) value of the crop type using the feature metric with the help of a crop age estimation unit in the example architecture shown in FIG.3. A detailed architecture of the crop age estimation unit is given in FIG. 6A and 6B.

The Crop age estimation Unit as shown in the FIG. 6A and 6B represents an advanced ensemble-based system for determining crop age through multi-modal image analysis. The estimation of the first DAS value by the crop age estimation unit in FIG. 6A and 6B comprises processing the plurality of images, more specifically the Side View Images (SVI) and Top View Images (TVI) - through a series of interconnected CNN based models (M0-M8) that systematically analyze various growth parameters of the crop type identified. Model-wise, detailed description of the crop age estimation unit with reference to the FIG. 6A and 6B is given below.

Initially, a trained machine learning model M0, which is a customized image segmentation model, is configured to extract the crop type from rest of the background in the plurality of images and segregates the processed plurality of images into side view images (SVI) and top view images (TVI) using one or more crop type extraction algorithms. The crop type extraction algorithms are standard image processing algorithms to isolate plant structure of the crop type from the rest part of the plurality of images. The SVI provides lateral plant visualization and the TVI enables overhead canopy assessment. Then, the SVI and the TVI are fed into a parallel processing stream of a pair of pre-trained machine learning models M1 and M2. Further, the SVI and the TVI are received by the pair of pre-trained machine learning models M1 and M2 respectively to verify the presence of fruit in the crop type. The model M1 processes the SVI and the model M2 processes the TVI and provides a possible combination of output post processing the SVI and the TVI.

The maximum possible combination of outputs of model M1 and M2 are four, which are mentioned in a case-box 1 named Fruit Presence Decision Matrix (Symbolic representation used: Fruit = 1, No Fruit = 0). Output of models M1 and M2 forms a case-box 1 architecture with four distinct classification cases:
Case 1: Nfr-Nfr (No Fruit-No Fruit)
Case 2: Fr-Fr (Fruit - Fruit)
Case 3: Fr-NFr (fruit - No Fruit)
Case 4: Nfr-Fr (No Fruit) - Fruit)

The system 100 may use any one of the M1 and M2 models to detect the fruit presence, and the output triggers a trained machine learning model M7 to estimate a fruit shape after clear confirmation of fruiting stage. The model M7 extracts a fruit shape from the SVI and estimate the fruit shape along with senescent. Further, the M7 model analyzes one or more fruit shape parameters and evaluates fruit development stages along with fruit maturity indicators. Rest non fruiting case trigger a pair of machine learning model M3 and M4 to check flower presence in the SVI and the TVI respectively.

Refer below logic table for case-box 1:

| **M1** | **M2** | **Output** | **Case** |
|---|---|---|---|
| 0 | 0 | 0 | 1 |
| 0 | 1 | 1 | 4 |
| 1 | 0 | 1 | 3 |
| 1 | 1 | 1 | 2 |

Case-box 1: fruit presence decision matrix (Fruit=1, No Fruit=0)

In the given logic table of case box 1, case 1, 2, 3 and 4 mentioned in the fruit presence decision matrix are the output of case-box 1, where case 1 triggers a pair of trained machine learning models M3 and M4 further to check a flower presence in the SVI and the TVI respectively. The rest of the other cases triggers a machine learning model M7 to estimate a fruit shape from the SVI and the TVI. The model M3 detects flower presence in the SVI side view image only while the model M4 detects flower presence in the TVI. Similar to previously mentioned for models M1 and M2, the maximum possible combination of outputs of model M3 and M4 are 4, which are mentioned in case-box 2 named Flower Presence Decision Matrix (Symbolic representation used: Flower = 1, No Flower = 0). Refer below logic table for case-box 2:

| **M3** | **M4** | **Output** | **Case** |
|---|---|---|---|
| 0 | 0 | 0 | 1 |
| 0 | 1 | 1 | 4 |
| 1 | 0 | 1 | 3 |
| 1 | 1 | 1 | 2 |

Case-box 2: flower presence decision matrix (Flower=1, No Flower=0)

Output of the model M3 and the model M4 form the flower presence matrix (case-box 2) with four distinct classification cases:
Case 1: NF1-NF1 (No Flower - No Flower)
Case 2: Fl-Fl (Flower - Flower)
Case 3: F1-NF1 (Flower - No Flower)
Case 4: NFl-Fl (No Flower) - Flower)

The system 100 may use any one of the M3 and M4 models to detects a flower presence. The output from models M3 and M4 triggers a trained machine learning model M6 to estimate the flower shape after clear confirmation of flowering stage. The model M6 extracts the SVI and performs floral morphological analysis to obtain a flower shape and a flower color. Further the model M6 flower processes the flower shape characteristics and analyzes flower development pattern. The model M6 also helps to evaluates flower maturity indicators.

Rest nonflowering case triggers a trained machine learning model M5 to estimate height of crop type from the SVI and the TVI respectively. The model M5 estimates a crop height of the crop type from the SVI when the non-flowering stage is detected based on the flower presence detection matrix. The model M5, executes standard height calculation algorithms on the SVI to estimate the crop height corresponding to the growth stage of the crop.

Further, the crop detection unit includes a trained neural network model M8 for estimating a number of leaves in the crop type. The model M8 processes the SVI and counts the number of leaves in the vegetative stage of the crop type.

The outputs of models M0 to M8 are then fed to a crop age estimation model. The crop age estimation model is a regression-based model trained on Composite Weighted Normalized Growth Metric calculated based on growth stage-wise features and corresponding days after sowing. The growth stage-wise features comprises the integrated data from the model M5, M6, M7 and M8 which include flower shape and the flower color, the fruit shape and senescent , the number of leaves in the vegetative stage of the crop type and the crop height. The growth stage-wise features are converted to composite weighted normalized growth metric according to the growth stage within a range of 0 to 1 using a feature metric converter. The composite weighted normalized growth metric is expressed as : $Composite Weighted Normalized Growth Metric \left(i\right) = \left[Wi\right] \times \left[Fi\right]$ (1) where,
[*W*] = Column Weight Matrix, and
[*F*] = Row Feature Matrix based on Crop Growth Stages (Vegetative, Flowering and Fruiting)

For Example:
In Vegetative Stage: Features are Height and Leaf Count, where [*W*] = Column Weight Matrix = [*W*₁*W*₂]
And $\left[F\right] = Row Feature Matrix = \left[\begin{matrix}F 1 \\ F 2\end{matrix}\right]$ where, F1: Height, F2: Leaf Count
Day-wise Height and Leaf Count data would be normalized (Min-Max Normalization) as below:
   Min-Max Normalization of features in Vegetative stage (Height and Leaf Count): $Normalized Height \left(i\right) = \frac{Height \left(i\right) - min \left(Height\right)}{max \left(Height\right) - min \left(Height\right)}$ (2) $Normalized LeafCount \left(i\right) = \frac{LeafCount \left(i\right) - min \left(LeafCount\right)}{max \left(LeafCount\right) - min \left(LeafCount\right)}$ (3) $\begin{matrix}Composite Weighted Normalized Growth Metric \left(i\right) = \\ {W}_{1} ∗ Normalized Height \left(i\right) + {W}_{2} ∗ Normalized LeafCount \left(i\right)\end{matrix}$ (4)
   where, the range of Composite Weighted Normalized Growth Metric (CWNGM) = [0,1].
Similarly, in Flowering Stage, Features are Flower Length and Flower Color: F1: Flower Length, F2: Flower Color. F1 is numeric but F2 is non-numeric; need to do embedding of F2 as per literature and experiment.
For F2 (Flower Color):
Color at start of flowering day $\left(Df\right) = flc 1 - - - > Eflc 1$ (5) $Df + 1 = flc 2 - - - > Eflc 2$ (6) till $Dfn = flcn - - - > Eflcn$ (7) Where, *flc*1, *flc*2, *flc*3... *flcn* are day-wise flower color variations (non-numeric) and corresponding embedding of color variations (numeric) are *Eflc*1*, Eflc*2*, Eflc*3*, .... Eflcn* respectively. Min-Max Normalization of features in Flowering stage (Flower Length and Flower Color): $\begin{matrix}Normalized Flower Length \left(i\right) \\ = \frac{Flower Length \left(i\right) - min \left(Flower Length\right)}{max \left(Flower Length\right) - min \left(Flower Length\right)}\end{matrix}$ (8) $\begin{matrix}Normalized Embedded Flower Color \left(i\right) = \\ \frac{Embedded Flower Color \left(i\right) - min \left(Embedded Flower Color\right)}{max \left(Embedded Flower Color\right) - min \left(Embedded Flower Color\right)}\end{matrix}$ (9) $\begin{matrix}Composite Weighted Normalized Growth Metric \left(i\right) \\ = {W}_{1} ∗ Normalized Flower Length \left(i\right) + {W}_{2} \\ ∗ Normalized Embedded Flower Color \left(i\right)\end{matrix}$ (10) Wherein the range of Composite Weighted Normalized Growth Metric (CWNGM) = [0,1].
Similarly, in Fruiting Stage, Features are Fruit Length and Fruit Color and Senescence:
F1: Fruit Length, F2: Fruit Color, F3: Senescence
F1 is numeric but F2 and F3 are non-numeric; need to do embedding for F2 and F3 as per literature and experiment. For F2 (Fruit Length):
   Color at start of fruiting day $\left(Df\right) = frc 1 - - - > Efrc 1$ (11) $Df + 1 = frc 2 - - - > Efrc 2$ (12) $Dfn = frcn - - - > Efrcn$ (13)
Where, *frc*1, *frc2,frc3...frcn* are day-wise fruit color variations (non-numeric) and 10corresponding embedding of color variations (numeric) are *Efrc*1, *Efrc*2, *Efrc*3, .... *Efren* respectively. For F3 (Senescence): $Senescence at start \left(let say Ds\right) = S 1 - - - > ES 1$ (14) $Ds + 1 = S 2 - - - - > ES 2$ (15) $Dsn = Sn - - > ESn$ (16) Where, *S*1, *S*2, *.... Sn* are day-wise Senescence variations (non-numeric) and corresponding embedding of Senescence (numeric) are *ES1, ES2,* ...., *ESn* respectively. Min-Max Normalization of features in Fruiting stage (Fruit Length, Fruit Color and, Senescence): $Normalized Fruit Length \left(i\right) = \frac{Fruit Length \left(i\right) - min \left(Fruit Length\right)}{max \left(Fruit Length\right) - min \left(Fruit Length\right)}$ (17) $\begin{matrix}Normalized Embedded Fruit Color \left(i\right) = \\ \frac{Embedded Fruit Color \left(i\right) - min \left(Embedded Fruit Color\right)}{max \left(Embedded Fruit Color\right) - min \left(Embedded Fruit Color\right)}\end{matrix}$ (18) $\begin{matrix}Normalized Embedded Senescence \left(i\right) = \\ \frac{Embedded Senescence \left(i\right) - min \left(Embedded Senescence\right)}{max \left(Embedded Senescence\right) - min \left(Embedded Senescence\right)}\end{matrix}$ (19) $\begin{matrix}Composite Weighted Normalized Growth Metric \left(i\right) = \\ {W}_{1} ∗ Normalized Fruit Length \left(i\right) + {W}_{2} ∗ Normalized Embedded Fruit Color \left(i\right) \\ + {W}_{3} ∗ Normalized Embedded Senescence \left(i\right)\end{matrix}$ (20) Wherein the range of Composite Weighted Normalized Growth Metric (CWNGM) = [0,1]

The crop age estimation model applies comprehensive age estimation algorithms to obtain the first Days After Sowing value (DAS) from the composite weighted normalized growth metric according to the growth stage of the crop type.

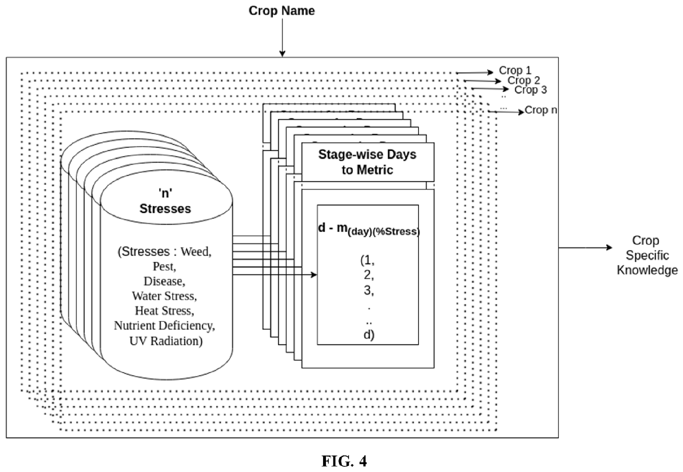

Further at step 206 of the method 200, the one or more hardware processors (104) are configured to estimate a crop-specific stress matrix from a stress value (in %) and the plurality of processed images, wherein the crop-specific stress matrix is obtained from an Impact Knowledge Base referred in FIG. 4 based on the crop type. The impact knowledge base, as depicted in FIG. 4 comprises comprehensive data specific to each crop type is created and maintained by the system100.

**Table 1**

| | **Stress 1** | | | | | .... | .... | **Stress n** | | | | |
|---|---|---|---|---|---|---|---|---|---|---|---|---|
| | Reduced Metric [0,1] | | | | | .... | .... | Reduced Metric [0,1] | | | | |
| **Days\ % Stress** | 0 | 5 | 15 | ..... | 100 | .... | ..... | 0 | 5 | 15 | .... | 100 |
| 1 | m10 | m15 | m115 | | m1100 | .... | ..... | m10 | m15 | m115 | | m1100 |
| 2 | m20 | m25 | m215 | | m2100 | .... | ..... | m20 | m25 | m215 | | m2100 |
| 3 | m30 | m35 | m315 | | m3100 | .... | ..... | m30 | m35 | m315 | | m3100 |
| 4 | m40 | m45 | m415 | | m4100 | .... | ..... | m40 | m45 | m415 | | m4100 |
| 5 | m50 | m55 | m515 | | m5100 | .... | ..... | m50 | m55 | m515 | | m5100 |
| 6 | m60 | m65 | m615 | | m6100 | .... | ..... | m60 | m65 | m615 | | m6100 |
| 7 | m70 | m75 | m715 | | m7100 | .... | ..... | m70 | m75 | m715 | | m7100 |
| . | . | . | . | | . | .... | ..... | . | . | . | | . |
| .. | .. | .. | .. | | .. | .... | ..... | .. | .. | .. | | .. |
| ... | .. | .. | .. | | .. | .... | ..... | .. | .. | .. | | .. |
| d | md0 | md5 | md15 | | md100 | | ..... | md0 | md5 | md15 | | md100 |

By incorporating historical crop data, weather patterns, and Control Measure Status (CMS), the impact knowledge base (FIG. 4) accounts for a broader set of stress factors including biotic, abiotic, and management-related stresses, that influence the crop development. The impact knowledge base (FIG. 4) allows for a more accurate and context-aware impact calculation, which prior systems may not integrate effectively or flexibly for specific crops under varying environmental conditions where quantitative stress metric (in %) with respect to stage-wise impact on growth features of particular crop information would be present. Moreover, the impact knowledge base (FIG. 4) is dynamically updated using Reinforcement Learning based methods, continuously refining stress metrics based on real-time feedback post the crop age estimation.

As the crop type is identified, the impact knowledge base (FIG. 4) is triggered and causes fetching a plurality of stress factors specific to the crop type, called the crop specific stress matrix.

Table 1 represents an example for a detailed impact knowledge base entry generated from crop experiments conducted in ideal conditions in the open field.

For example, say Total Stresses taken in the table 1 to n, wherein Stress 1 = Weed , Stress 2 = Heat stress, Stress 3 = Pest, and so on for 'd' days based on crop growth stage for a given crop type. The representation of stress matrix is as follows: $m \left(day\right) \left(%Stress\right)$ (21) where, m represents metric, day represents day at which experiment is done and %Stress represents stress occurrence % in image. $m 10 < \left(X1\right) B < m 1100$ (22) $mn 0 < \left(X1\right) B < mn 100$ (23)

The % stress mentioned in table, Table 1 signifies the amount of stress occurred in the plurality of images received. Here, for experiment, the % stresses have taken from 0% to 100% with 5% interval. The % stress interval value can be changed according to the crop type, the open field and other environmental factors. Ideally, corresponding for each % stress value, the metric should be calculated which is made of features, from a Feature Metric Converter. Then, the experiment becomes exhaustive and complex. So, experiment is performed for each day with minimum % stress and different stress taken into picture.

**Table 2**

| | **Stress 1 (X1 = Weed)** | | | | | .... | ..... | **Stress n : (Xn = UV Radiation)** | | | | |
|---|---|---|---|---|---|---|---|---|---|---|---|---|
| | Reduced Metric [0,1] | | | | | | | Reduced Metric [0,1] | | | | |
| **DAS\ % Stress** | 0 | 5 | 15 | ..... | 100 | | | 0 | 5 | 15 | ..... | 100 |
| 1 | m10 | m15 | m115 | | m1100 | | | m10 | m15 | m115 | | m1100 |
| 2 | m20 | m25 | m215 | | m2100 | | | m20 | m25 | m215 | | m2100 |
| 3 | m30 | m35 | m315 | | m3100 | | | m30 | m35 | m315 | | m3100 |
| 4 | m40 | m45 | m415 | | m4100 | | | m40 | m45 | m415 | | m4100 |
| 5 | m50 | m55 | m515 | | m5100 | | | m50 | m55 | m515 | | m5100 |
| 6 | m60 | m65 | m615 | | m6100 | | | m60 | m65 | m615 | | m6100 |
| 7 | m70 | m75 | m715 | | m7100 | | | m70 | m75 | m715 | | m7100 |
| . | . | . | . | | . | | | . | . | . | | . |
| .. | .. | .. | .. | | .. | | | .. | .. | .. | | .. |
| ... | .. | .. | .. | | .. | | | .. | .. | .. | | .. |
| d | md0 | md5 | md15 | | md100 | | | md0 | md5 | md15 | | md100 |

At the end of crop duration, the % stresses and impact metric are illustrated in Table 2 as below.

Further, at the same step of the method 200, a second days after sowing (modified DAS) value is estimated by aggregating the feature metric and an impact value, wherein the impact value comprises a biotic stress impact, an abiotic stress impact and a management stress impact. The impact value is computed by the impact calculation unit (FIG. 5). The impact calculation unit (FIG. 5) computes the impact value (in %) according to stress type, for given the plurality of images. Input to the impact calculation unit are crop specific impact knowledge, Control Measure Status, the plurality of images (SVI and TVI), weather data. The impact value is estimated based on the biotic stress impact, the abiotic stress impact and the management stress impact as follows: $\begin{matrix}Biotic Stress Impact , \left(BS\right) \\ = F \left(\begin{matrix}\left(X1\right) B ∗ WB 1 , \left(X2\right) B ∗ WB 2 , \left(X3\right) B ∗ WB 3 , … . . , \left(Xn\right) B \\ ∗ WBn\end{matrix}\right)\end{matrix}$ (24) *where, Biotic Stresses : XB =* {*X*1, *X*2, *X*3, *...,Xn}B* 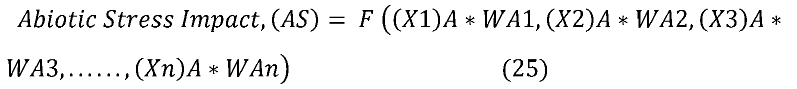 Abiotic Stress Impact, (AS) = F ((X1)A * WA1, (X2)A *WA2, (X3)A * WA3,......,(Xn)A * W An) (25) *where, Abiotic Stresses : XA* = {*X*1, *X*2, *X*3, *X*4, ... . , *Xn*} *A* $\begin{matrix}Management Stress Impact , \left(MS\right) \\ = F \left(\begin{matrix}\left(X1\right) M ∗ WM 1 , \left(X2\right) M ∗ WM 2 , \left(X3\right) M ∗ WM 3 , … . , \\ \left(Xn\right) M ∗ WMn\end{matrix}\right)\end{matrix}$ (26) *where Management Stresses : XM =* {*X*1, *X*2*, X*3, *..... Xn*}*M;* and

Further, based on Equations 21, 2and 23, the impact value is calculated as follows: $Impact Value = F \left(\begin{matrix}AS ∗ WA , BS ∗ WB , MS ∗ \\ WM\end{matrix}\right)$ (27)
Where *W* = { *WA, WB, WM* } is Weightage of Abiotic stress, Biotic stress and Management Stress and range of *W* is [0,1]
Where *WB* = {*WB*1*, WB*2*, WB*3*, ... ... .., WBn*} are weightage for 'n' biotic stresses and Range is [0,1],
*WA =* {*WA*1, *WA2, WA3, ... ... .., WAn*} are weightage for 'n' abiotic stresses and Range is [0,1] and
*WM =* {*WM*1, *WM*2, *WM*3, *... ... .., WMn*} are weightage for 'n' management stresses and Range is [0,1]

At step 208 of the method 200, the one or more hardware processors (104) are configured to compute a change in DAS (ΔDAS) as the difference between the modified DAS and the first DAS. Further at the same step a crop age is estimated based on the modified DAS value. The modified DAS value gives the actual crop age where the given crop type has achieved considering the impact and the crop specific stresses from the surrounding environment.

FIG. 3A through 3B illustrates a system architecture of the non-invasive method for crop age estimation in accordance with some embodiments of the present disclosure.

FIG. 4 depicts a high-level architecture for impact knowledge base according to some embodiments of the present disclosure.

FIG. 5 is a block diagram illustrating impact calculation in accordance with some embodiments of the present disclosure.

FIG. 6A through 6B illustrates a crop age estimation unit of the non-invasive method for crop age estimation in accordance with some embodiments of the present disclosure.

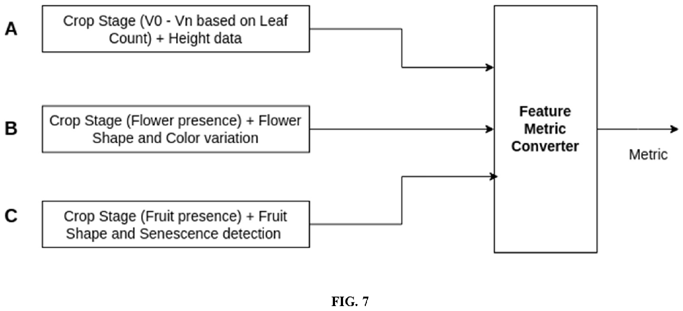

FIG. 7 is a block diagram illustrating a feature metric converter within the crop age estimation unit in accordance with some embodiments of the present disclosure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of estimating crop age of standing crops in open fields or controlled environment agriculture. The embodiment thus provides a method and system for non-invasively estimating crop age of standing crops. Existing techniques uses manual inspection, remote sensing or UAV-based studies for crop height and biomass estimation but fails to establish the relationship between crop age and growth features like biomass, crop height, and other phenotypic factors, that improves accuracy in predicting biomass and yield over time. Unlike the existing techniques, the present disclosure provides a non-invasive system and method for accurately estimating crop age of standing crops by integrating crop specific stress and impact value based on crop type along with corresponding days after sowing (DAS). Moreover, the embodiments herein further estimate a change in days after sowing along with a biomass value to generate a set of actionable insights to improve crop health, mitigate stress effects, and optimize agricultural practices.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for crop age estimation, the method comprising:
identifying (202), via one or more hardware processors, a crop type from a plurality of images of one or more crops using a crop detection model, wherein the plurality of images comprises a top view and a side view of the one or more crops;
extracting (204), via the one or more hardware processors, a feature metric of the crop type by preprocessing the plurality of images, wherein the feature metric comprises a plant height, a flower shapes, a fruit shapes, and a number of leaves, on the crop type, using a plurality of preprocessing models;
estimating (204), via the one or more hardware processors, a first Days After Sowing (DAS) value of the crop type using the feature metric;
calculating (206), via the one or more hardware processors, a crop-specific stress matrix from a stress value and the plurality of images, wherein the crop-specific stress matrix comprises of a set of crop specific stresses obtained from an Impact Knowledge Base based on the crop type,
wherein the stress value is obtained using a pixel-based analysis for weed, pest, disease, nutrient deficiency stresses, and sensor-based data for a plurality of environmental stresses;
estimating (206), via the one or more hardware processors, a second DAS value by aggregating the feature metric and an impact value, wherein the impact value is computed from the crop-specific stress matrix,
wherein the impact value comprises of a biotic stress impact, an abiotic stress impact, and a management stress impact; and estimating (208), via the one or more hardware processors, a crop age from the second DAS value, wherein the second DAS value represents an actual age of the crop type based on the impact value.

2. The processor implemented method as claimed in claim 1, wherein the Impact Knowledge Base is updated dynamically through one or more standard techniques by continuously refining stress impact metrics based on real-time feedback post the crop age estimation.

3. The processor implemented method as claimed in claim 1, wherein the impact value is calculated by comparing a real-time sensor data to a predefined threshold value, and wherein the real-time sensor data comprises of a heat stress and a water stress.

4. The processor implemented method as claimed in claim 1, wherein the second DAS value and the first DAS value are used to estimate a change in DAS (ΔDAS), and wherein the change in DAS (ΔDAS) is the difference between the second DAS value and the first DAS value.

5. The processor implemented method as claimed in claim 4, wherein the ΔDAS and a biomass value is used to generate a set of actionable insights to improve crop health, mitigate stress effects, and optimize one or more agricultural practices, and wherein the biomass value is derived from the plurality of images using a biomass detection model.

6. A system (100) for crop age estimation, comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
identify, a crop type from a plurality of images of one or more crops using a crop detection model, wherein the plurality of images comprises a top view and a side view of the one or more crops;
extract, a feature metric of the crop type by preprocessing the plurality of images, wherein the feature metric comprises a plant height, a flower shapes, a fruit shapes, and a number of leaves, on the crop type, using a plurality of preprocessing models;
estimate, a first Days After Sowing (DAS) value of the crop type using the feature metric;
calculate, a crop-specific stress matrix from a stress value and the plurality of images, wherein the crop-specific stress matrix comprises a set of crop specific stresses obtained from an Impact Knowledge Base based on the crop type,
wherein the stress value is obtained using a pixel-based analysis for weed, pest, disease, nutrient deficiency stresses, and sensor-based data for a plurality of environmental stresses;
estimate a second DAS value by aggregating the feature metric and an impact value, wherein the impact value is computed from the crop-specific stress matrix,
wherein the impact value comprises of a biotic stress impact, an abiotic stress impact, and a management stress impact; and
estimate, a crop age from the second DAS value, wherein the second DAS value represents an actual age of the crop type based on the impact value.

7. The system as claimed in claim 6, wherein the Impact Knowledge Base is updated dynamically through standard techniques by continuously refining stress impact metrics based on real-time feedback post the crop age estimation.

8. The system as claimed in claim 6, wherein the impact value is calculated by comparing real-time sensor data with a predefined threshold value and wherein the real-time sensor data comprises of a heat stress and a water stress.

9. The system as claimed in claim 6, wherein the modified DAS and the first DAS is used to estimate a change in DAS (ΔDAS), and wherein the change in DAS (ΔDAS) is the difference between the modified DAS and the first DAS.

10. The system as claimed in claim 9, wherein the ΔDAS and a biomass value is used to generate a set of actionable insights to improve crop health, mitigate stress effects, and optimize agricultural practices, wherein the biomass value is derived from the plurality of images using a biomass detection model.

11. One or more non-transitory machine-readable information storage mediums comprising one or more instructions which when executed by one or more hardware processors cause:
identifying, a crop type from a plurality of images of one or more crops using a crop detection model, wherein the plurality of images comprises a top view and a side view of the one or more crops;
extracting, a feature metric of the crop type by preprocessing the plurality of images, wherein the feature metric comprises a plant height, a flower shapes, a fruit shapes, and a number of leaves, on the crop type, using a plurality of preprocessing models;
estimating, a first Days After Sowing (DAS) value of the crop type using the feature metric;
calculating, a crop-specific stress matrix from a stress value and the plurality of images, wherein the crop-specific stress matrix comprises of a set of crop specific stresses obtained from an Impact Knowledge Base based on the crop type,
wherein the stress value is obtained using a pixel-based analysis for weed, pest, disease, nutrient deficiency stresses, and sensor-based data for a plurality of environmental stresses;
estimating, a second DAS value by aggregating the feature metric and an impact value, wherein the impact value is computed from the crop-specific stress matrix,
wherein the impact value comprises of a biotic stress impact, an abiotic stress impact, and a management stress impact; and
estimating, a crop age from the second DAS value, wherein the second DAS value represents an actual age of the crop type based on the impact value.

12. The one or more non-transitory machine-readable information storage mediums as claimed in claim 11, wherein the Impact Knowledge Base is updated dynamically through -standard techniques by continuously refining stress impact metrics based on real-time feedback post the crop age estimation.

13. The one or more non-transitory machine-readable information storage mediums as claimed in claim 11, wherein the impact value is calculated by comparing real-time sensor data to a predefined threshold value and wherein the real-time sensor data comprises of a heat stress and a water stress.

14. The one or more non-transitory machine-readable information storage mediums as claimed in claim 11, wherein the modified DAS and the first DAS is used to estimate a change in DAS (ΔDAS), and wherein the change in DAS (ΔDAS) is the difference between the modified DAS and the first DAS.

15. The one or more non-transitory machine-readable information storage mediums as claimed in claim 14, wherein the ΔDAS and a biomass value is used to generate a set of actionable insights to improve crop health, mitigate stress effects, and optimize agricultural practices, wherein the biomass value is derived from the plurality of images using a biomass detection model.
